# EUROPEAN PATENT SPECIFICATION

(11) **EP 0 363 462 B1**
(45) Date of publication and mention of the grant of the patent: **09.06.1993**
(21) Application number: 89903889.7
(22) Date of filing: 06.03.1989
(51) Int. Cl.: H02K 5/00, B41J 29/02

(54) **A MOUNTING STRUCTURE FOR AN ELECTRIC MOTOR**
MONTAGEVORRICHTUNG FÜR EINEN ELEKTRISCHEN MOTOR
STRUCTURE DE MONTAGE POUR MOTEUR ELECTRIQUE

(30) Priority: 28.03.1988 US 174731
(43) Date of publication of application: 18.04.1990
(73) Proprietor: NCR INTERNATIONAL INC., Dayton, Ohio 45479 (US)
(72) Inventor: BOSSACK, Thomas, J., Candor, NY 13743 (US)
(74) Representative: Robinson, Robert George
(86) International application number: PCT/US89/00899
(87) International publication number: WO 89/09509

(56) References cited:
- EP-A- 0 166 131
- EP-A- 0 193 794
- FR-A- 2 118 910
- FR-A- 2 520 844
- US-A- 3 329 785

## Description

The present invention relates to a mounting structure for an electric motor having a mounting flange and more particularly, but not exclusively, to a mounting structure for mounting an electric motor to the frame of a printing apparatus.

It is known for a printing apparatus to require one or more electric motors to drive certain parts of the printing apparatus. In a dot matrix printer, for example, there is a requirement for a small motor to drive the print head carriage in reciprocating manner. A second motor is used to drive the paper such as a receipt, a slip or a journal at the end of the printing operation.

The demands of certain printing operations place a high duty cycle on the drive motor and it is essential that the motor be secured and contained in an appropriate manner because the motor is relied upon for long lasting operation which may involve either continuous or intermittent duty.

The use of screws, bolts, nuts and the like is well-known for securing the motor mounting flange to a side frame of the printing apparatus. Other fastening members have included self-tapping screws, for example, in plastic frames or serrated washers engaging the surface of metal frames.

One of the disadvantages of employing a number of such parts for securing the motor mounting flange to the side frame is that installation time is generally high. Also if one of the parts is incorrectly installed or of poor quality it may work itself loose or fail and thereby permit undamped relative movement between the motor and side frame causing deleterious effects on the motor and its operational efficiency.

EP 0 193 794 discloses a mounting structure for a motor in which part of the motor housing is retained by resilient clip means and pins are provided for receipt in openings in the front surface of the housing.

An alternative type of motor support is described in U.S. Patent No. 4,625,134 which relates to a motor and associated gear train assembly in which the motor is held by a cradle having a base and legs with tabs which lock the cradle to the gear train housing.

One of the disadvantages of the above alternative type of motor support is that relative movement, such as of a rotational nature, between the motor and cradle may arise and vibrations created by the motor in operation may not be adequately damped.

It is an object of the present invention to provide a mounting structure for an electric motor having a mounting flange, the structure having mounting means enabling the electric motor to be easily installed and when so installed to be securely positioned and resiliently restrained therein.

Thus according to the invention, there is provided a mounting structure for an electric motor having a mounting flange, comprising a housing portion for receiving said mounting flange and having a main wall portion for abutting a front wall portion of said flange and locating means for cooperating with said front wall portion of said flange to restrain said mounting flange moving in a rotational direction relative to said housing portion, characterized in that said housing portion includes side wall means for extending from said main wall portion and engaging the side edge of said flange and for extending beyond said flange for enclosing at least a portion of said motor, said side wall means including a first resilient finger on a first side of said housing portion and a second resilient finger on a second side of said housing portion opposite said first side whereby upon insertion of said motor into said housing portion said mounting flange engages and deflects outwardly said resilient fingers which return to their original position after passage of said mounting flange and which engage a surface of said mounting flange to retain said motor in said housing portion, and the locating means comprises first and second locating means arranged adjacent said first and second fingers respectively so as to be in a likewise mutually opposite relationship.

One example of the invention will now be described, by way of example, with reference to the accompanying drawings, in which:
Fig. 1 is a side elevational view of a printer frame member in accordance with one embodiment of the present invention;

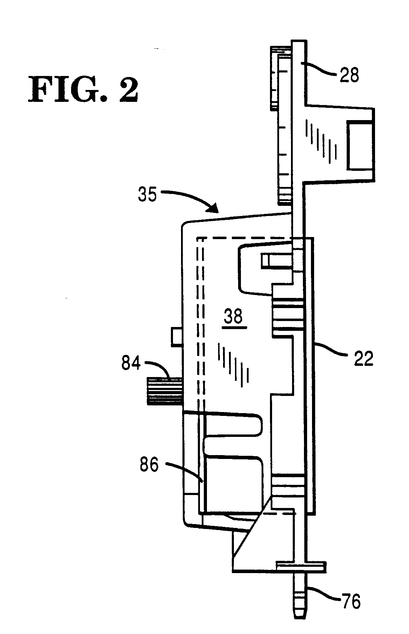

Fig. 2 is a view taken on the line 2-2 of Fig. 1;
Fig. 3 is a view taken on the line 3-3 of Fig. 1;
Fig. 4 is a side elevational view of the printer frame member taken in the direction opposite from Fig. 1;
Fig. 5 is a view taken on the line 5-5 of Fig. 4; and
Fig. 6 is a perspective view of a printer showing the motor mounting arrangement.

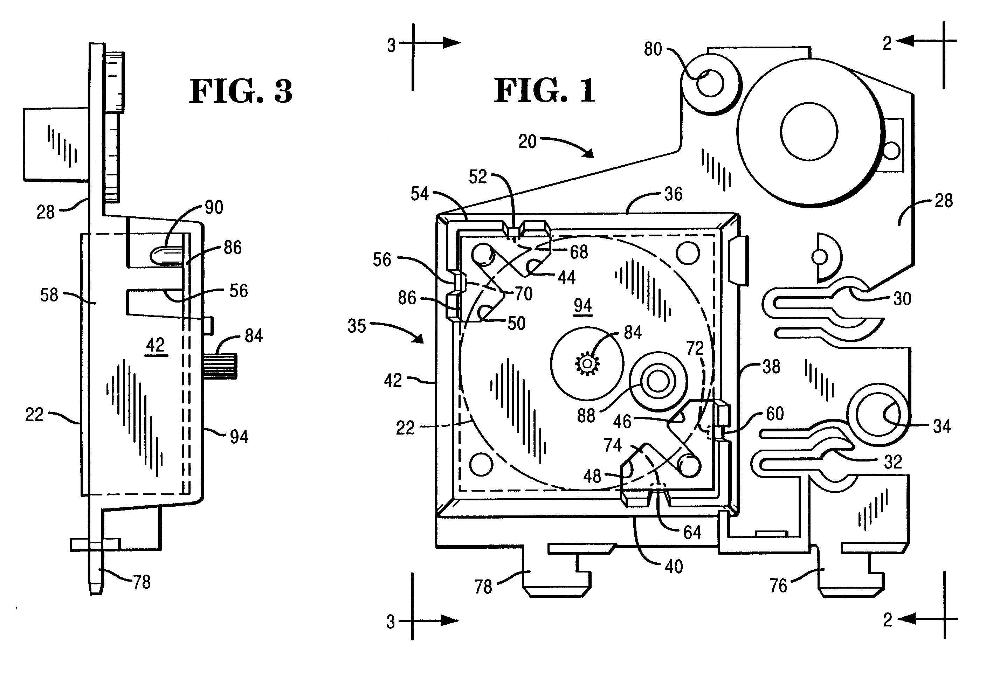

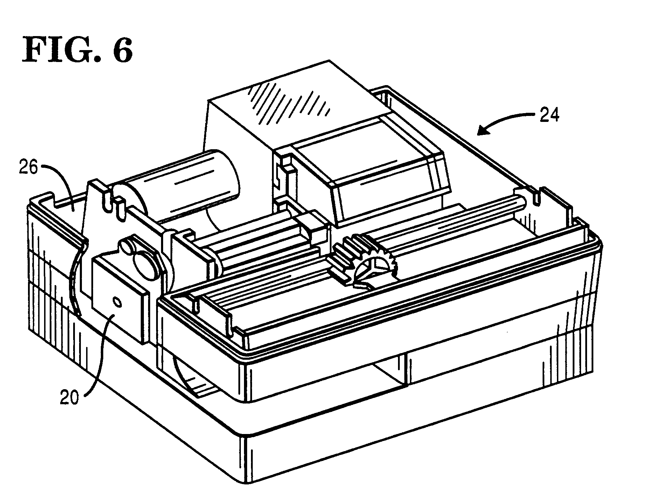

Fig. 1 is a side elevational view of a frame member 20 which provides the means for mounting a circular-shaped electric motor 22 in a printer 24, as illustrated in Fig. 6. The frame member 20 is of unitary construction and preferably is made of plastic in a molding operation. A preferred material for the member 20 is polycarbonate with 15% PTFE (polytetrafluoroethylene) and 15% carbon fiber to provide for electrostatic discharge grounding. Another material that may be used is polycarbonate with 15% PTFE and 20% glass fiber. The member 20 is a portion of the printer and is located in a left hand cavity 26 of the printer 24 and provides support and bearing means for other parts or elements of the printer.

The frame member 20 includes a plate portion 28 having a bearing opening 30 for a shaft (not shown) that is used to support a paper drive roller. A second bearing opening 32 is provided for a shaft (also not shown) that is used to support a camming roller. A third bearing 34 is provided in the plate portion 28 to support a pivot shaft (also not shown). The orientation and mechanism of the structure associated with the bearings 30, 32 and 34 are fully described in copending Application Serial No. US-67,757, filed June 29, 1987. The plate portion 28 provides supporting structure for record media thickness compensating mechanism which is described in the above-noted application.

The frame member 20 is formed to provide an enclosure-type configuration, as 35, of generally square shape that includes walls 36, 38, 40 and 42. The walls 36, 38, 40 and 42 extend in an outward direction from the plate portion 28. The top wall 36 and the bottom wall 40 are essentially the same form, and the right hand wall 38 and the left hand wall 42 are essentially the same form. The lower right hand corner and the upper left hand corner of the enclosure 35 are provided with cutout portions, as 44 in wall 36, as 46 in wall 38, as 48 in wall 40, and as 50 in wall 42. The cutout portions 46 and 48 bridge the walls 38 and 40, and the cutout portions 44 and 50 bridge the walls 36 and 42. The wall 36 includes a finger 52 extending outwardly from a narrow portion 54 of the wall 36, and the wall 42 includes a like-formed finger 56 extending outwardly from a narrow portion 58 of the wall 42. Likewise, the wall 38 includes a finger 60 extending outwardly from a narrow portion 62 of the wall 38, and the wall 40 includes a like-formed finger 64 extending outwardly from a narrow portion 66 of the wall 40. The fingers 52, 56, 60 and 64 are formed to incline slightly at an angle with respect to the walls so as to have the tip portions 68, 70, 72 and 74 positioned inwardly from the respective walls 36, 42, 38 and 40.

A pair of spaced lugs 76 and 78 are provided at the bottom of the frame member 20 to secure the member to the printer 24, and a bearing 80 is provided at the top of the member for a shaft (not shown) that is used to support the frame member 20 to other parts of the printer. An opening 82 is provided in the center of the enclosure 35 for the shaft 84 of the motor 22. A journal 88 is provided adjacent the shaft 84 as an integral part of the frame member 20 for accommodating a driven member (not shown).

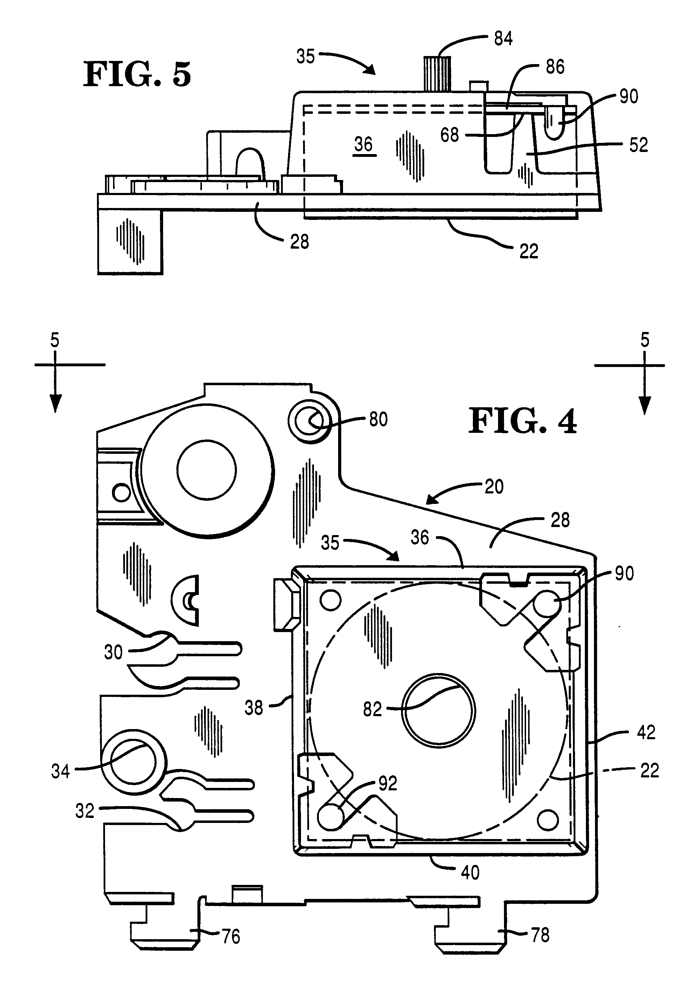

The motor 22 is inserted in an axial direction from the left in Fig. 3 and the motor mounting flange 86 bears against the fingers 52, 56, 60 and 64, and deflects the fingers outwardly from the center of the enclosure 35. A pair of pilot studs 90 and 92 are provided as an integral part of the floor portion 94 of the enclosure 35. The motor mounting flange 86 has a pair of apertures for receiving the pilot studs 90 and 92 as the motor 22 is installed into the housing 35. The tips 68, 70, 72 and 74 of the respective fingers 52, 56, 60 and 64 capture the edges of the motor mounting flange 86 and secure the motor 22 in place by snap action of the fingers in a direction back to their normal unrestrained position. This structure and positioning of the parts eliminates any axial play between the motor 22 and the frame member 20 which may be caused by any clearance between the motor flange 86 and the snap fingers 52, 56, 60 and 64.

It is thus seen that herein shown and described is a motor mounting bracket for use in a printer. The bracket has a plurality of snap fingers that are engageable by the motor mounting flange and are biased upon insertion of the motor.

## Claims

1. A mounting structure for an electric motor (22) having a mounting flange (86), comprising a housing portion (35) for receiving said mounting flange (86) and having a main wall portion (94) for abutting a front wall portion of said flange (86) and locating means for cooperating with said front wall portion of said flange (86) to restrain said mounting flange (86) moving in a rotational direction relative to said housing portion (35), characterized in that said housing portion includes side wall means (36,38,40,42) for extending from said main wall portion (94) and engaging the side edge of said flange (86) and for extending beyond said flange (86) for enclosing at least a portion of said motor (22), said side wall means (36,38,40,42) including a first resilient finger (52,56) on a first side of said housing portion (35) and a second resilient finger (60,64) on a second side of said housing portion (35) opposite said first side whereby upon insertion of said motor (22) into said housing portion (35) said mounting flange (86) engages and deflects outwardly said resilient fingers (52,56,60,64) which return to their original position after passage of said mounting flange (86) and which engage a surface of said mounting flange (86) to retain said motor (22) in said housing portion (35),and the locating means comprises first and second locating means arranged adjacent said first and second fingers (52,56,60,64) respectively so as to be in a likewise mutually opposite relationship.

2. A mounting structure according to claim 1, characterized in that said resilient fingers (52,56,60,64) are integrally formed with and cut out of said side wall means (36,38,59,42) of said housing portion (35).

3. A mounting structure according to claim 1 or claim 2, characterized in that said locating means (90,92) includes a pair of stud-like members (90,92) for co-operation within a pair of apertures of said mounting flange (86).

4. A mounting structure according to any one of claims 1 to 3, characterized in that said housing portion (35) is substantially square in shape and defines cutout portions (44, 46, 48, 50) at two opposite corners thereof.

5. A mounting structure according to claim 4, characterized in that said cutout portions (44, 46, 48, 50) bridge adjacent walls (36, 38, 40, 42) of said housing portion (35) and said resilient fingers (52, 56, 60, 64) are disposed in said adjacent walls (36, 38, 40, 42).

6. A mounting structure according to any one of claims 1 to 5, characterized by a pair of spaced lugs (76, 78) and bearing means (80) spaced from said lugs (76, 78) for supporting said mounting structure from a printing apparatus (24).

7. A mounting structure as claimed in any one of claims 1 to 6, characterized in that said housing portion (35) includes a journal member (88) disposed adjacent the centre of said housing portion (35).

8. A mounting structure as claimed in any one of claims 1 to 7, characterized in that said structure is moulded of polycarbonate materials incorporating polytetrafluoroethylene and carbon fiber.

9. A mounting structure as claimed in any one of claims 1 to 7, characterized in that said structure is moulded of polycarbonate material incorporating polytetrafluoroethylene and glass fiber.

10. A mounting structure as claimed in any one of claims 1 to 9, characterized in that said resilient fingers (52, 56, 60, 64) are arranged such that after passage of said mounting flange (86) they exert a restraining force against said surface of said mounting flange (86).

## Patentansprüche

1. Befestigungskonstruktion für einen Elektromotor (22) mit einem Befestigungsflansch (86), die einen Gehäuseabschnitt (35) zur Aufnahme des Befestigungsflansches (86) umfaßt und einen Hauptwandabschnitt (94) zur Anlage an einen Vorderwandabschnitt des Flansches (86) und eine Halteeinrichtung zum Zusammenwirken mit dem Vorderwandabschnitt des Flansches (86) aufweist um zu verhindern, daß der Befestigungsflansch (86) sich in einer Verdrehrichtung bezüglich des Gehäuseabschnitts (35) bewegt,
dadurch gekennzeichnet, daß
der Gehäuseabschnitt Seitenwandeinrichtungen (36,38,40,42) umfaßt, um sich von dem Hauptwandabschnitt (94) weg zu erstrecken und mit dem Seitenrand des Flansches (86) in Eingriff zu gehen und sich über den Flansch (86) hinaus zu erstrecken, um den Motor (22) zumindest teilweise zu umschließen, wobei die Seitenwandeinrichtungen (36,38,40,42) einen ersten federnden Finger (52,56) auf einer ersten Seite des Gehäuseabschnitts (35) und einen zweiten federnden Finger (60,64) auf einer zweiten Seite des Gehäuseabschnitts (35) gegenüber der ersten Seite aufweisen, wobei der Befestigungsflansch (86) bei Einsetzen des Motors (22) in den Gehäuseabschnitt (35) mit den federnden Fingern (52,56,60,64) in Eingriff geht und diese nach außen ablenkt, welche nach Passieren des Befestigungsflansches (86) in ihre ursprüngliche Position zurückkehren und mit einer Oberflache des Befestigungsflansches (86) in Eingriff gehen, um den Motor (22) in dem Gehäuseabschnitt (35) festzuhalten, und die Halteeinrichtung erste und zweite Halteeinrichtungen umfaßt, die angrenzend an die ersten bzw. zweiten Finger (52,56,60,64) angeordnet sind, damit gleichfalls in einer gegenüberliegenden Beziehung zueinander stehen.

2. Befestigungskonstruktion nach Anspruch 1, dadurch gekennzeichnet, daß die federnden Finger (52,56,60,64) einstückig mit den Seitenwandeinrichtungen (36,38,59,42) des Gehäuseabschnitts (35) verbunden und aus diesen ausgeschnitten sind.

3. Befestigungskonstruktion nach Anspruch 1 oder Anspruch 2, dadurch gekennzeichnet, daß die Halteeinrichtung (90,92) ein Paar bolzenartiger Elemente (90,92) zum Zusammenwirken innerhalb eines Paares von Öffnungen des Befestigungsflansches (86) umfaßt.

4. Befestigungskonstruktion nach einem der Ansprüche 1 bis 3, dadurch gekennzeichnet, daß der Gehäuseabschnitt (35) im wesentlichen von rechteckiger Form ist und an zwei gegenüberliegenden Ecken Ausschnittabschnitte (44,46,48,50) definiert.

5. Befestigungskonstruktion nach Anspruch 4, dadurch gekennzeichnet, daß die Ausschnittabschnitte (44,46,48,50) benachbarte Wände (36,38,40,42) des Gehäuseabschnitts (35) überbrücken und die federnden Finger (52,56,60,64) in den benachbarten Wänden (36,38,40,42) angeordnet sind.

6. Befestigungskonstruktion nach einem der Ansprüche 1 bis 5, gekennzeichnet durch ein Paar beabstandeter Stifte (76,78) und von den Stiften (76,78) beabstandete Lagereinrichtungen (80) zur Abstützung der Befestigungskonstruktion auf einer Druckvorrichtung (24).

7. Befestigungskonstruktion nach einem der Ansprüche 1 bis 6, dadurch gekennzeichnet, daß der Gehäuseabschnitt (35) ein Zapfenelement (88) umfaßt, das angrenzend an die Mitte des Gehäuseabschnitts (35) angeordnet ist.

8. Befestigungskonstruktion nach einem der Ansprüche 1 bis 7, dadurch gekennzeichnet, daß die Konstruktion aus einer Polycarbonat-Polytetrafluoräthylen-Verbindung mit Kohlefasern gegossen ist.

9. Befestigungskonstruktion nach einem der Ansprüche 1 bis 7, dadurch gekennzeichnet, daß die Konstruktion aus einer Polycarbonat-Polytetrafluoräthylen-Verbindung mit Glasfasern gegossen ist.

10. Befestigungskonstruktion nach einem der Ansprüche 1 bis 9, dadurch gekennzeichnet, daß die federnden Finger (52,56,60,64) derart angeordnet sind, daß sie nach Passieren des Befestigungsflansches (86) eine Rückhaltekraft auf die Oberfläche des Befestigungsflansches (86) ausüben.

## Revendications

1. Structure de montage pour un moteur électrique (22) ayant une bride (86) de montage, comportant une partie de boîtier (35) destinée à recevoir ladite bride (86) de montage et ayant une partie de paroi principale (94) destinée à s'appliquer en butée contre une partie de paroi avant de ladite bride (86) et des moyens de positionnement destinés à coopérer avec ladite partie de paroi avant de ladite bride (86) pour retenir ladite bride de montage (86) se déplaçant en rotation par rapport à ladite partie de boîtier (35), caractérisée en ce que ladite partie de boîtier comprend des moyens à parois latérales (36, 38, 40, 42) destinées à faire saillie de ladite partie de paroi principale (94), à engager le bord latéral de ladite bride (86) et à s'étendre au-delà de ladite bride (86) pour renfermer au moins une partie dudit moteur (22), lesdits moyens à parois latérales (36, 38, 40, 42) comprenant un premier doigt élastique (52, 56) sur un premier côté de ladite partie de boîtier (35) et un second doigt élastique (60, 64) sur un second côté de ladite partie de boîtier (35) opposé audit premier côté de manière que, à la suite de l'insertion dudit moteur (22) dans ladite partie de boîtier (35), ladite bride (86) de montage porte contre lesdits doigts élastiques (52, 56, 60, 64) et les fasse fléchir vers l'extérieur, lesquels reviennent vers leur position initiale après passage de ladite bride (86) de montage et engagent une surface de ladite bride (86) de montage pour retenir ledit moteur (22) dans ladite partie de boîtier (35), et les moyens de positionnement comprennent des premier et second moyens de positionnement agencés à proximité immédiate desdits premier et second doigts (52, 56, 60, 64), respectivement, de façon à être de la même manière dans une disposition mutuellement opposée.

2. Structure de montage selon la revendication 1, caractérisée en ce que lesdits doigts élastiques (52, 56, 60, 64) sont réalisés d'une seule pièce avec, et découpés dans, lesdits moyens à parois latérales (36, 38, 59, 42) de ladite partie de boîtier (35).

3. Structure de montage selon la revendication 1 ou la revendication 2, caractérisée en ce que lesdits moyens de positionnement (90, 92) comprennent deux éléments (90, 92) analogues à des ergots destinés à coopérer avec deux ouvertures de ladite bride (86) de montage.

4. Structure de montage selon l'une quelconque des revendications 1 à 3, caractérisée en ce que ladite partie de boîtier (35) est de forme sensiblement carrée et définit des parties découpées (44, 46, 48, 50) à deux angles opposés de cette partie.

5. Structure de montage selon la revendication 4, caractérisée en ce que lesdites parties découpées (44, 46, 48, 50) s'étendent entre des parois adjacentes (36, 38, 40, 42) de ladite partie de boîtier (35) et lesdits doigts élastiques (52, 56, 60, 64) sont disposés dans lesdites parois adjacentes (36, 38, 40, 42).

6. Structure de montage selon l'une quelconque des revendications 1 à 5, caractérisée par deux pattes espacées (76, 78) et un moyen à palier (80) espacé desdites pattes (76, 78) pour supporter ladite structure de montage par un appareil d'impression (24).

7. Structure de montage selon l'une quelconque des revendications 1 à 6, caractérisée en ce que ladite partie de boîtier (35) comprend un élément à coussinet (88) disposé à proximité immédiate du centre de ladite partie de boîtier (35).

8. Structure de montage selon l'une quelconque des revendications 1 à 7, caractérisée en ce que ladite structure est moulée en des matières du type polycarbonate comprenant du polytétrafluoréthylène et des fibres de carbone.

9. Structure de montage selon l'une quelconque des revendications 1 à 7, caractérisée en ce que ladite structure est moulée en une matière du type polycarbonate comprenant du polytétrafluoréthylène et des fibres de verre.

10. Structure de montage selon l'une quelconque des revendications 1 à 9, caractérisée en ce que lesdits doigts élastiques (52, 56, 60, 64) sont agencés de manière que, après le passage de ladite bride de montage (86), ils exercent une force de retenue contre ladite surface de ladite bride (86) de montage.
